# EUROPEAN PATENT APPLICATION

(11) **EP 4 793 806 A1**
(43) Date of publication of application: **19.08.2026**
(21) Application number: 23955436.3
(22) Date of filing: 11.10.2023
(51) Int. Cl.: G06F 21/62, G06F 21/64, H04L 9/32

(54) **ACCESS CONTROL DEVICE, ACCESS CONTROL SYSTEM, AND ACCESS CONTROL PROGRAM**

(71) Applicant: FUJITSU LIMITED, Kawasaki-shi, Kanagawa 211-8588 (JP)
(72) Inventor: SUZUKI, Dai, Kawasaki-shi, Kanagawa 211-8588 (JP); TAKA, Kenji, Kawasaki-shi, Kanagawa 211-8588 (JP)
(74) Representative: Haseltine Lake Kempner LLP
(86) International application number: PCT/JP2023/036935
(87) International publication number: WO 2025/079186

(57) **Abstract**

There are provided an access control device, an access control system, and an access control program that improve convenience of an NFT. A data management unit of an access control server (10) stores data associated with an NFT on a blockchain, and stores disclosure destination information indicating a disclosure destination of the data in association with identification information of the NFT. A disclosure destination authentication unit of the access control server (10) determines whether or not to disclose the data to a disclosure requester based on the disclosure destination information stored in the data management unit in a case where a disclosure request of the data is received from the disclosure requester, the disclosure request being based on an access destination of the data indicated by the NFT.

## Description

### Field

The present invention relates to an access control device, an access control system, and an access control program.

### Background

In recent years, a mechanism using a non-fungible token (NFT) that enables secure transaction of data such as an image by utilizing a blockchain has attracted attention. The NFT is unique digital data, and is issued, for example, not only for digital art but also for items that can be used in a metaverse or a game.

The NFT issued for the digital data is managed on a blockchain. In the NFT, a URL indicating digital data to be issued is registered. A user can access data associated with the NFT by referring to the NFT. By associating the NFT with the digital data, in response to a transaction of the digital data, the token in which the holder is described is traded on the blockchain, and ownership of the digital data is guaranteed.

In the related art, there are techniques for various digital data transactions including transactions using such NFTs. For example, a technique of recording encrypted information in the NFT, causing an application server to manage a decryption key and perform authentication of a client, and allowing the authenticated client to acquire the decryption key, decrypt information of the NFT, and access data has been proposed. In addition, a technique of encrypting data and registering the encrypted data in a public chain, and managing a decryption key on a local blockchain created for each user group has been proposed. In addition, a technique of performing access control on content to which the NFT is issued based on an access control list has been proposed. In addition, a technique of verifying an owner of the NFT with an electronic signature and permitting access to content associated with the NFT has been proposed.

### Citation List

### Patent Literature

Patent Literature 1: Japanese Laid-open Patent Publication No. 2021-166028
Patent Literature 2: Japanese Laid-open Patent Publication No. 2019-174995
Patent Literature 3: U.S. Laid-open Patent Publication No. 2022/0222364
Patent Literature 4: U.S. Laid-open Patent Publication No. 2023/0055835

### Summary

### Technical Problem

However, the fundamental idea of the NFT is to ensure transparency and reliability of transactions based on a blockchain and to uniquely identify holders, and information recorded in the NFT and data associated with a URL in the NFT are basically fully disclosed. For this reason, it is difficult to perform a transaction based on the NFT by associating the NFT with data of which a disclosure range of personal information or the like is desired to be limited. As described above, in the techniques in the related art using the NFT, data to be used is limited, and it is difficult to improve convenience of the NFT.

In addition, in the technique of allowing the client authenticated by the application server to acquire the decryption key based on the encrypted information recorded in the NFT and access the data, disclosure control of the data to a third party is not performed, and it is difficult to convert data of which the disclosure range is desired to be limited into an NFT. In addition, in the technique of encrypting data, registering the encrypted data in a public chain, and managing a decryption key on a local blockchain created for each user group, data management using the NFT is not assumed, and it is difficult to convert data of which the disclosure range is desired to be limited into an NFT. In addition, in the technique of performing access control based on an access control list or the technique of performing access control by verifying an owner of the NFT by an electronic signature, disclosure control of data to a third party is not performed, and it is difficult to convert data of which the disclosure range is desired to be limited into an NFT.

The disclosed technique has been made in view of the above circumstances, and an object of the disclosed technique is to provide an access control device, an access control system, and an access control program that improve convenience of the NFT.

### Solution to Problem

The access control device, the access control system, and the access control program disclosed in this application are, in one aspect, a data management unit that stores data associated with an NFT on a blockchain and stores disclosure destination information indicating a disclosure destination of the data in association with identification information of the NFT, and a disclosure destination authentication unit that determines whether or not to disclose the data to a disclosure requester based on the disclosure destination information stored in the data management unit in a case where a disclosure request of the data is received from the disclosure requester, the disclosure request being based on an access destination of the data indicated by the NFT.

### Advantageous Effects of Invention

According to one aspect of the access control device, the access control system, and the access control program disclosed in the present application, there is an effect of improving convenience of the NFT.

### Brief Description of Drawings

FIG. 1 is a schematic configuration diagram of an NFT management system according to an example.
FIG. 2 is a block diagram of an NFT management system and an access control server according to a first example.
FIG. 3 is a diagram illustrating an example of a disclosure destination management table.
FIG. 4 is a block diagram of an NFT management system and an access control server according to a second example.
FIG. 5 is a diagram illustrating processing when issuing an NFT in the NFT management system according to the second example.
FIG. 6 is a diagram illustrating processing when transferring an NFT in the NFT management system according to the second example.
FIG. 7 is a diagram illustrating processing when changing a disclosure destination in the NFT management system according to the second example.
FIG. 8 is a diagram illustrating processing when performing access by a user as a disclosure destination in the NFT management system according to the second example.
FIG. 9 is a flowchart of disclosure destination setting processing for data associated with an NFT by the access control server according to the second example.
FIG. 10 is a diagram illustrating another example of the disclosure destination management table.
FIG. 11 is a diagram illustrating processing when issuing an NFT in the NFT management system according to a third example.
FIG. 12 is a diagram illustrating processing when transferring an NFT in the NFT management system according to the third example.
FIG. 13 is a diagram illustrating processing when changing a disclosure destination in the NFT management system according to the third example.
FIG. 14 is a diagram illustrating processing when performing access by a user as a disclosure destination in the NFT management system according to the third example.
FIG. 15 is a flowchart of processing related to disclosure destination setting for data associated with an NFT by the access control server according to the third example.
FIG. 16 is a diagram illustrating processing when issuing an NFT in the NFT management system according to a fourth example.
FIG. 17 is a diagram illustrating processing when transferring an NFT in the NFT management system according to the fourth example.
FIG. 18 is a diagram illustrating processing when updating a person having a change authority of a disclosure destination in the NFT management system according to the fourth example.
FIG. 19 is a diagram illustrating processing when changing a disclosure destination in the NFT management system according to the fourth example.
FIG. 20 is a diagram illustrating processing when performing access by a user as a disclosure destination in the NFT management system according to the fourth example.
FIG. 21 is a flowchart of processing related to disclosure destination setting for data associated with an NFT by the access control server according to the fourth example.
FIG. 22 is a hardware configuration diagram of the access control server.

### Description of Embodiments

Hereinafter, examples of an access control device, an access control system, and an access control program disclosed in the present application will be described in detail with reference to the drawings. Note that the access control device, the access control system, and the access control program disclosed in the present application are not limited by the following examples.

### [First Example]

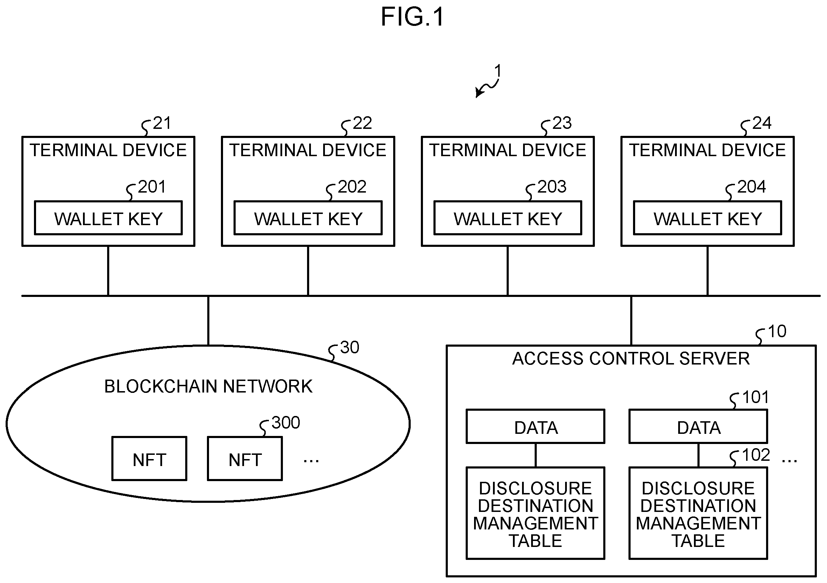

FIG. 1 is a schematic configuration diagram of an NFT management system according to an example. As illustrated in FIG. 1, the NFT management system 1 includes an access control server 10, terminal devices 21 to 24, and a blockchain network 30. Here, a case where a user P1 issues an NFT 300 to data 101, a user P2 who is the first holder of the data associated with the NFT 300 transfers the NFT 300 to a user P3, and a user P4 refers to the data 101 associated with the NFT 300 will be described. Here, the transfer of the NFT 300 includes transfer of the data 101 associated with the NFT 300.

The terminal device 21 is a computer used by the user P1 who is an issuer of the NFT 300. The terminal device 21 holds a wallet key 201 which is a public key of the user P1 and is used in the blockchain network 30. The terminal device 22 is a computer used by the user P2 who receives the NFT 300 issued for data from the user P1 and is a first holder of the NFT 300. The terminal device 22 holds a wallet key 202 which is a public key of the user P2 and is used in the blockchain network 30. The terminal device 23 is a computer used by the user P3 who receives transfer of the NFT 300 from the user P2 and is a second holder of the NFT 300. The terminal device 23 holds a wallet key 203 which is a public key of the user P3 and is used in the blockchain network 30. The terminal device 24 is a computer used by the user P4 who is a third party and refers to the data 101 associated with the NFT 300. The terminal device 24 holds a wallet key 204 which is a public key of the user P4 and is used in the blockchain network 30. Here, the terminal devices 21 to 24 are an example, and the number of the terminal devices connected to the network may be any number.

The blockchain network 30 manages a plurality of NFTs including the NFT 300 issued by the user P1. The NFT 300 is transferred by rewriting information of the holder.

The access control server 10 holds a disclosure destination management table 102 in which information of a disclosure destination is registered in association with the data 101 associated with the NFT 300 and the identification information of the NFT 300, the disclosure destination being permitted to be disclosed. The access control server 10 may hold data associated with another NFT.

The access control server 10 receives a disclosure request for the data 101 which is held, from a third party such as the user P4 other than the holder. Then, the access control server 10 determines whether to permit disclosure of the disclosure request to the requester by referring to the disclosure destination management table 102. In a case where disclosure is permitted, the access control server 10 discloses the data 101 to the requester of the disclosure request by transmitting information of the data 101 to the terminal device 24. Conversely, in a case where disclosure is not permitted, the access control server 10 rejects the disclosure request.

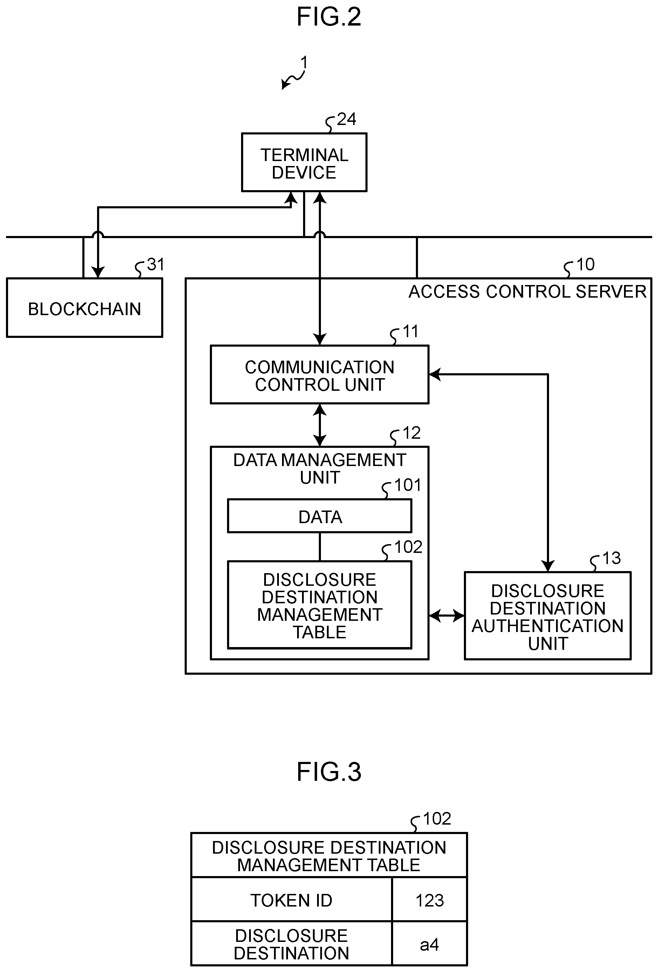

FIG. 2 is a block diagram of the NFT management system and the access control server according to a first example. Next, details of the access control server 10 according to the present example will be described with reference to FIG. 2. As illustrated in FIG. 2, the access control server 10 according to the present example includes a communication control unit 11, a data management unit 12, and a disclosure destination authentication unit 13. In FIG. 2, a blockchain 31 which is a database realized by the blockchain network 30 is illustrated. The blockchain 31 stores the NFT 300 issued for the data 101.

The terminal device 24 receives an instruction from the user P4, and executes the following processing. The terminal device 24 acquires a uniform resource locator (URL) of the data 101 associated with the NFT 300 by referring to the NFT 300 stored in the blockchain 31. Then, the terminal device 24 accesses the access control server 10 by using the acquired URL, and transmits a disclosure request of the data 101 associated with the NFT 300 to the access control server 10. The disclosure request of the data 101 includes a token ID of the NFT 300 issued for the data 101. In addition, the disclosure request of the data 101 includes the electronic signature of the user P4 that is created using the wallet key 204 which is the public key of the user P4.

Thereafter, in a case where the disclosure request is permitted, the terminal device 24 receives the information of the data 101 associated with the NFT 300 from the access control server 10, and discloses the information of the data 101 to the user P4.

The communication control unit 11 performs communication control in a case where the access control server 10 accesses the blockchain 31 and communication control in a case where the access control server 10 performs communication with the terminal devices 21 to 24. For example, the communication control unit 11 controls communication between the data management unit 12 and the terminal device 24 and between the disclosure destination authentication unit 13 and the terminal device 24. In this manner, the data management unit 12 and the disclosure destination authentication unit 13 actually perform communication with the terminal devices 21 to 24 and the blockchain 31 via the communication control unit 11. Here, in the following description, there is a case where the relay of the communication control unit 11 is omitted and the data management unit 12 and the disclosure destination authentication unit 13 directly perform direct communication with the terminal devices 21 to 24 and the blockchain 31.

The communication control unit 11 receives the disclosure request of the data 101 associated with the NFT 300 from the terminal device 24. Next, the communication control unit 11 causes the disclosure destination authentication unit 13 to perform authentication of the requester of the disclosure of the data 101 by outputting the disclosure request to the disclosure destination authentication unit 13.

The disclosure destination authentication unit 13 receives an input of the disclosure request from the user P4 from the communication control unit 11. Next, the disclosure destination authentication unit 13 verifies the electronic signature that is added to the disclosure request, and acquires the wallet address of the authenticated user P4. Next, the disclosure destination authentication unit 13 refers to the disclosure destination management table 102 held by the data management unit 12.

FIG. 3 is a diagram illustrating an example of the disclosure destination management table. In the disclosure destination management table 102, for example, as illustrated in FIG. 3, a token identifier (ID) which is identification information of the NFT 300 and information of a disclosure destination of the data 101 associated with the NFT 300 are registered. The ID of the user for which disclosure is permitted is registered in the information of the disclosure destination. That is, in a case where the token ID of the NFT 300 is known, the user recognized as the disclosure destination of the data 101 associated with the NFT 300 can be specified from the disclosure destination management table 102. In the present example, as the information of the disclosure destination, the wallet address of the user for which disclosure is permitted is used. Here, the information registered in the disclosure destination management table 102 of FIG. 3 is an example.

Here, in the present example, the wallet address in the blockchain 31 is used as the identification information of the user as the disclosure destination, but this information is not particularly limited as long as the information is information that can uniquely identify the user. For example, other known information may be used as the identification information of the user. In addition, a user ID (for example, a login ID) or the like managed by the access control server 10 may be used. In addition, identification information of a user specified by using a search function provided by the access control server 10 or another device may be used.

The disclosure destination authentication unit 13 determines whether or not the user P4 is recognized as the disclosure destination by collating the wallet address of the user P4 that is acquired from the electronic signature of the user P4 with the information of the disclosure destination. In a case where the user P4 is recognized as the disclosure destination, the disclosure destination authentication unit 13 instructs the data management unit 12 to disclose the data 101 to the user P4. On the other hand, in a case where the user P4 is not recognized as the disclosure destination, the disclosure destination authentication unit 13 notifies the terminal device 24 of rejection of the disclosure request via the communication control unit 11.

The data management unit 12 holds the data 101 associated with the NFT 300 and the disclosure destination management table 102 illustrated in FIG. 3. For example, the data management unit 12 receives an input of registration information from the holder of the NFT 300, and registers the information in the disclosure destination management table 102.

The data management unit 12 receives an instruction to disclose the data 101 to the user P4 from the disclosure destination authentication unit 13. Then, the data management unit 12 discloses the data 101 to the user P4 by transmitting the designated data 101 to the terminal device 24 used by the user P4.

As described above, the access control server according to the present example holds the information of the disclosure destination of the data associated with the NFT in association with the NFT, and determines whether or not the requester of the disclosure request transmitted via the NFT associated with the data is recognized as the disclosure destination. Then, in a case where the requester of the disclosure request is recognized as the disclosure destination, the access control server discloses the data associated with the NFT to the user who requested the disclosure request.

As described above, the access control server according to the present example can limit the disclosure destination of the data associated with the NFT to the user recognized as the disclosure destination, and can appropriately manage the disclosure range of the data associated with the NFT. Therefore, it is possible to improve convenience of the NFT.

### [Second Example]

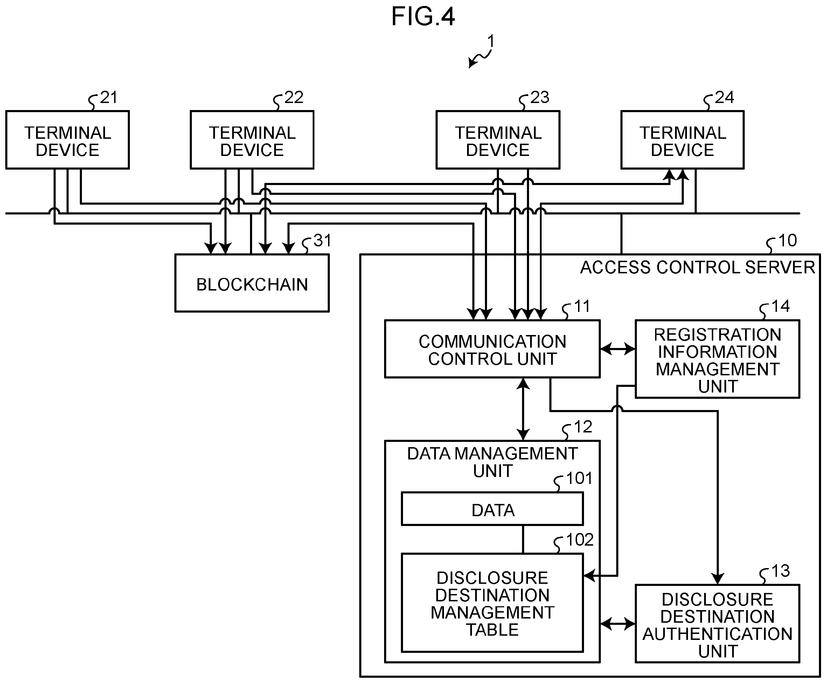

FIG. 4 is a block diagram of the NFT management system and the access control server according to a second example. Next, the NFT management system 1 and the access control server 10 according to the present example will be described with reference to FIG. 4.

The terminal device 21 receives an instruction from the user P1 who is the issuer of the NFT 300, and performs the following processing. The terminal device 21 issues the NFT 300 to the data 101 by using a contract 301 of the blockchain 31. In the NFT 300, a token ID, holder information, and a URL of the associated data 101 are registered as additional information. Here, in the present example, the terminal device 21 registers, as the holder information, the wallet address of the user who is the holder.

Further, the terminal device 21 registers the data 101 and the disclosure destination management table 102 in the access control server 10 at the same time when issuing the NFT 300. Here, the disclosure destination management table 102 according to the present example is also illustrated in FIG. 3. When registering the disclosure destination management table 102 in the access control server 10, the terminal device 21 may perform registration in a state where information of the disclosure destination is not registered.

In addition, the terminal device 21 may assign an electronic signature of the user P1 who is the issuer of the NFT 300 to the data 101. Thereby, it is possible to verify a person who registered the data 101.

In a case where the user P2 transfers the NFT 300 to the user P3, the terminal device 22 changes the holder information of the NFT 300 from the user P2 to the user P3.

In a case where the user P3 sets the disclosure destination of the data 101, the terminal device 23 receives an instruction from the user P3, assigns an electronic signature of the user P3 that is generated based on the wallet key 203 of the user P3 to the disclosure destination setting request, and transmits the electronic signature to the access control server 10.

In a case where the user P4 refers to the data 101 associated with the NFT 300, the terminal device 24 receives an instruction from the user P4, and acquires a URL of the data 101 by referring to the NFT 300. Next, the terminal device 24 accesses the acquired URL, and transmits a disclosure request of the data 101 to the access control server 10, the disclosure request being a request to which the electronic signature of the user P4 generated based on the wallet key 204 of the user P4 is added. Thereafter, in a case where disclosure to the user P4 is permitted, the terminal device 24 receives the information of the data 101 from the access control server 10, and discloses the information of the data 101 to the user P4.

As illustrated in FIG. 4, the access control server 10 according to the present example includes a communication control unit 11, a data management unit 12, a disclosure destination authentication unit 13, and a registration information management unit 14.

The communication control unit 11 controls communication between the access control server 10 and the terminal devices 21 to 24 and between the access control server 10 and the blockchain 31, similarly to the first example. The communication control unit 11 outputs the data 101 and the disclosure destination management table 102 received from the terminal device 21 to the data management unit 12, and causes the data management unit 12 to hold the data 101 and the disclosure destination management table 102. In addition, the communication control unit 11 outputs a disclosure destination setting request received from the terminal device 23 to the registration information management unit 14. Further, the communication control unit 11 outputs a disclosure request of the data 101 received from the terminal device 24 to the disclosure destination authentication unit 13. Here, in the following description, there is a case where the relay of the communication control unit 11 is omitted and the data management unit 12, the disclosure destination authentication unit 13, and the registration information management unit 14 perform direct communication with the terminal devices 21 to 24 and the blockchain 31.

The data management unit 12 receives the data 101 associated with the NFT 300 and the disclosure destination management table 102 associated with the token ID of the NFT 300 from the terminal device 21, and holds the data 101 and the disclosure destination management table 102. Thereafter, the data management unit 12 receives an instruction to disclose the data 101 to the user P4 from the disclosure destination authentication unit 13. Then, the data management unit 12 discloses the data 101 to the user P4 by transmitting the designated data 101 to the terminal device 24 used by the user P4.

The registration information management unit 14 acquires a disclosure destination setting request, which is a change request of the disclosure destination of the data 101 by the user P3, from the communication control unit 11. In this case, the user P3 is a change requester of the disclosure destination. Next, the registration information management unit 14 verifies the electronic signature electronic signature of the user P3 that is added to the disclosure destination setting request, and acquires the wallet address of the authenticated user P3. Next, the registration information management unit 14 accesses the NFT 300 that is issued for the data 101 stored in the blockchain 31, and acquires the information of the holder of the NFT 300 from the additional information of the NFT 300. In the present example, the registration information management unit 14 acquires the wallet address of the holder as the information of the holder of the NFT 300.

Then, the registration information management unit 14 determines whether or not the user P3 has an authority to change the disclosure destination by collating the wallet address of the user P3 with the information of the holder of the NFT 300, the wallet address being acquired from the electronic signature added to the disclosure destination setting request which is a change request of the disclosure destination of the data 101. In a case where it is determined that the user P3 does not have an authority to change the disclosure destination, the registration information management unit 14 transmits a notification indicating that the disclosure destination setting request from the user P3 is rejected, to the terminal device 23 via the communication control unit 11.

In the present example, the user P3 is the current holder who has received the NFT 300 from the user P2, and the wallet address of the user P3 is registered as information of the holder in the additional information of the NFT 300. Therefore, the registration information management unit 14 determines that the user P3 has an authority to change the disclosure destination. Then, in a case where the user P3 has an authority to change the disclosure destination, the registration information management unit 14 permits the disclosure destination setting request which is a change request of the disclosure destination from the user P3, and registers the disclosure destination of the data 101 associated with the designated NFT 300 in the disclosure destination management table 102. Here, the user P3 designates the user P4 as the disclosure destination, and the registration information management unit 14 registers the wallet address of the user P4 in the disclosure destination management table 102 as the disclosure destination of the data 101 associated with the NFT 300. Thereby, the registration information management unit 14 changes the disclosure destination of the data 101 to the user P4.

Here, in the present example, the wallet address used in the blockchain 31 is used as information of a person having a change authority of the disclosure destination. On the other hand, other information can be used as long as the user can be uniquely specified. For example, the user ID of the access control server 10 may be used as the information of the person having a change authority of the disclosure destination.

The disclosure destination authentication unit 13 receives an input of the disclosure request from the user P4 from the communication control unit 11. The disclosure destination authentication unit 13 verifies the electronic signature electronic signature of the user P4 that is added to the disclosure request, and acquires the wallet address of the authenticated user P4. Next, the disclosure destination authentication unit 13 acquires the information of the disclosure destination corresponding to the token ID of the NFT 300 from the disclosure destination management table 102.

Then, the disclosure destination authentication unit 13 determines whether or not the user P4 is recognized as the disclosure destination by collating the wallet address that is acquired from the electronic signature of the user P4 included in the disclosure request with the information of the disclosure destination. In a case where the user P4 is not recognized as the disclosure destination, the disclosure destination authentication unit 13 transmits a notification indicating that the disclosure request is rejected to the terminal device 24 via the communication control unit 11.

In the present example, since the user P4 is set as the disclosure destination by the user P3 and the user P4 is recognized as the disclosure destination, the disclosure destination authentication unit 13 instructs the data management unit 12 to disclose the data 101 to the user P4.

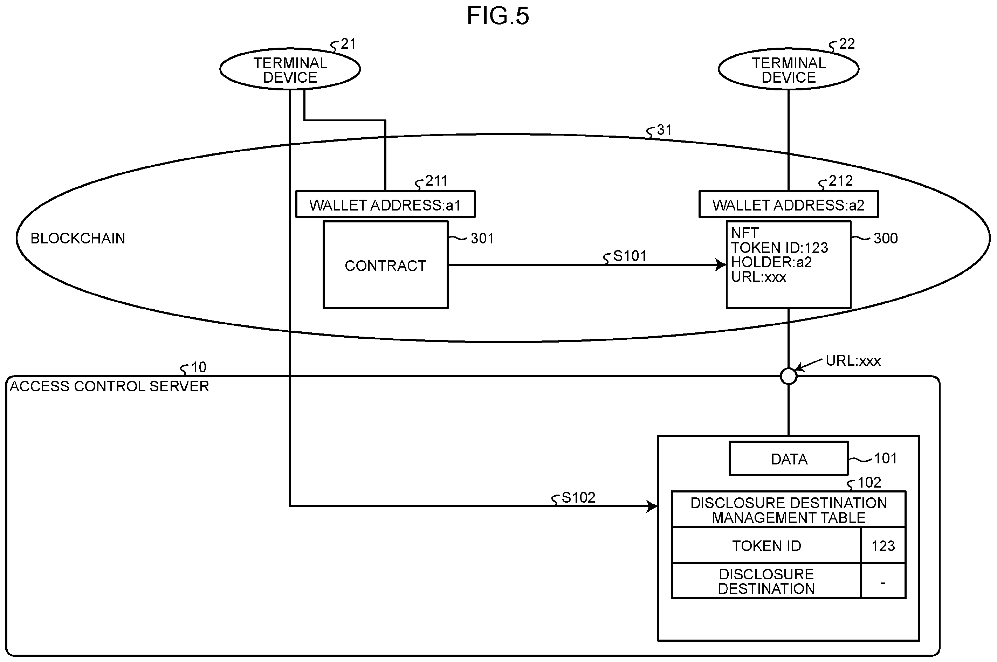

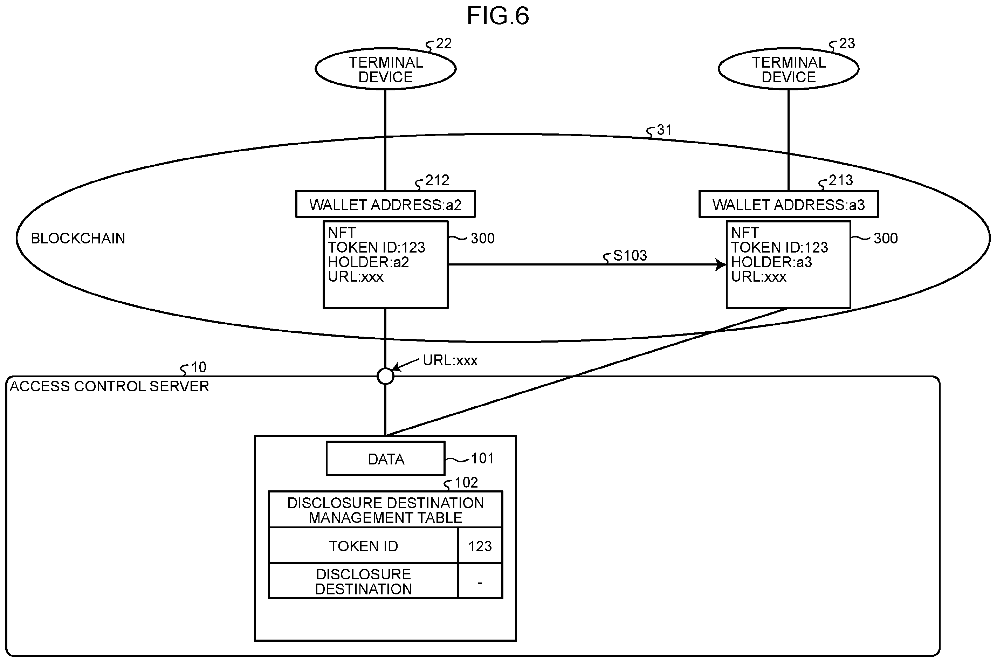

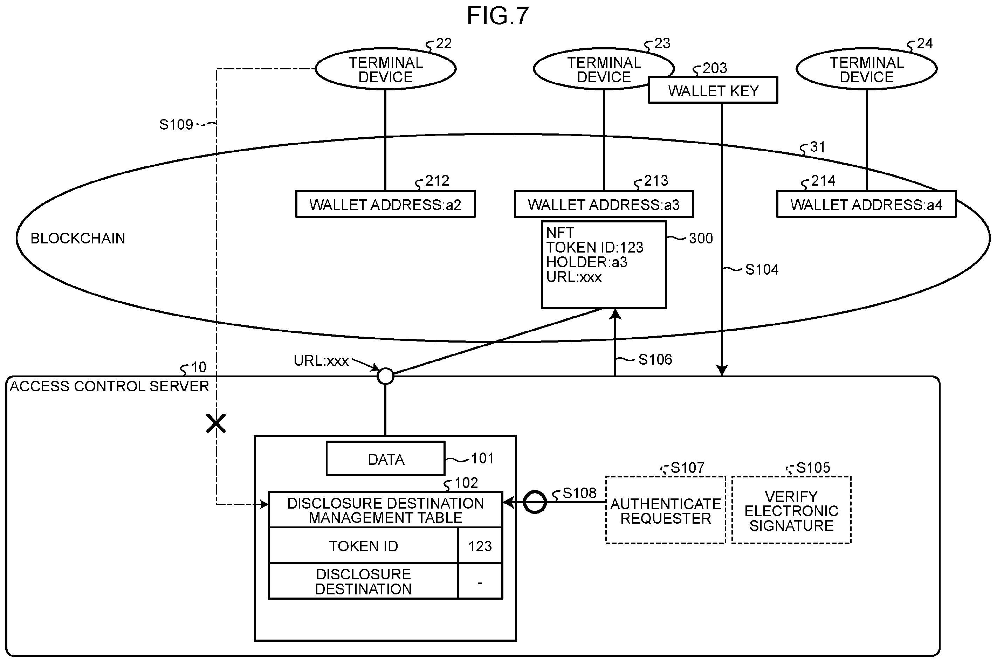

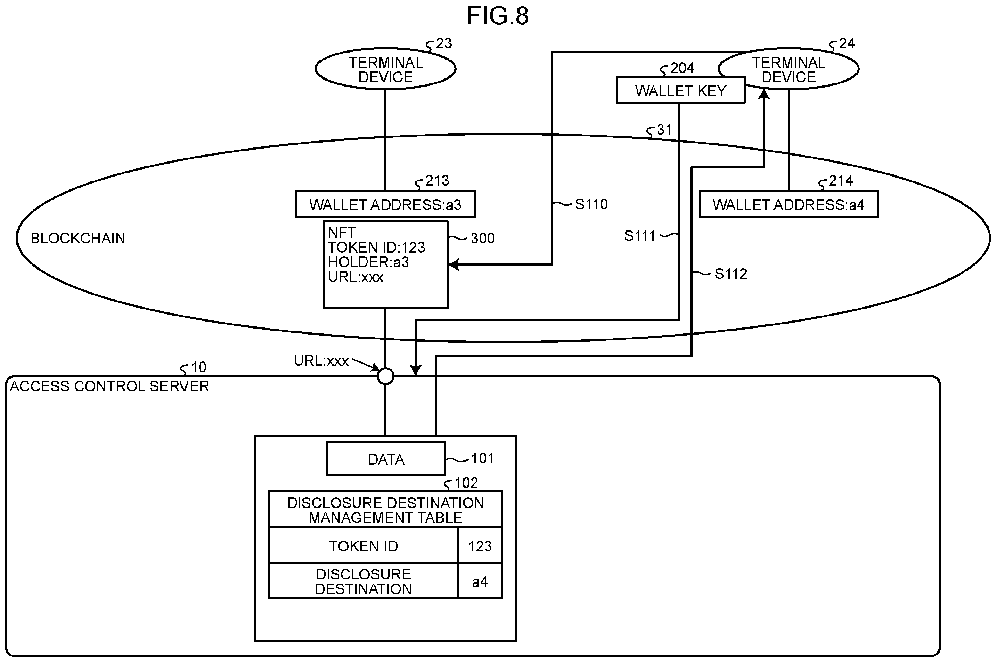

Next, a flow of management of the NFT 300 in the NFT management system 1 according to the second example will be collectively described again. FIG. 5 is a diagram illustrating processing when issuing the NFT in the NFT management system according to the second example. FIG. 6 is a diagram illustrating processing when transferring the NFT in the NFT management system according to the second example. FIG. 7 is a diagram illustrating processing when changing the disclosure destination in the NFT management system according to the second example. FIG. 8 is a diagram illustrating processing when performing access by the user as the disclosure destination in the NFT management system according to the second example.

Here, the user P1 holds the wallet address 211 corresponding to the wallet key 201 of the user P1 in the blockchain 31. A value of the wallet address 211 is "a1". In addition, the user P2 holds the wallet address 212 corresponding to the wallet key 202 of the user P2 in the blockchain 31. A value of the wallet address 212 is "a2". In addition, the user P3 holds the wallet address 213 corresponding to the wallet key 203 of the user P3 in the blockchain 31. A value of the wallet address 213 is "a3". In addition, the user P4 holds the wallet address 214 corresponding to the wallet key 204 of the user P4 in the blockchain 31. A value of the wallet address 214 is "a4". Here, in FIG. 5 to FIG. 8, a1 to a4 which are values corresponding to each of the wallet addresses 211 to 214 are described for easy understanding.

As illustrated in FIG. 5, the terminal device 21 used by the user P1 who is the issuer of the NFT 300 issues the NFT 300 for the data 101 by using the contract 301 (step S101). The additional information including the token ID, the information of the holder, and the URL of the associated data 101 is added to the NFT 300. In this case, the terminal device 21 registers a2, which is the wallet address 212 of the user P2, as the information of the holder of the NFT 300.

Further, the terminal device 21 causes the data management unit 12 of the access control server 10 to hold the data 101 associated with the NFT 300 and the disclosure destination management table 102 of the data 101 associated with the NFT 300 (step S102). In this case, the terminal device 21 registers the token ID of the NFT 300 in the disclosure destination management table 102.

Next, as illustrated in FIG. 6, in a case where the user P2 transfers the NFT 300 to the user P3, the terminal device 22 changes the information of the holder of the NFT 300 from the wallet address 212 of the user P2 to the wallet address 213 of the user P3. That is, the terminal device 22 changes the information of the holder of the NFT 300 from a2 to a3 (step S103). In this case, the data 101 and the disclosure destination management table 102 stored in the access control server 10 are not changed.

Next, as illustrated in FIG. 7, in a case where the user P3 sets the user P4 as the disclosure destination, the terminal device 23 creates a disclosure destination setting request to which the electronic signature of the user P3 created based on the wallet key 203 is added, the disclosure destination setting request being a change request of the disclosure destination that is for setting the user P4 as the disclosure destination. Then, the terminal device 23 transmits the created disclosure destination setting request to the access control server 10 (step S104).

The registration information management unit 14 of the access control server 10 verifies the electronic signature included in the disclosure destination setting request, and acquires the wallet address 213 of the user P3 who is a change requester of the disclosure destination (step S105).

Next, the registration information management unit 14 of the access control server 10 acquires, from the additional information, the wallet address 213 of the user P3 that is the information of the holder of the NFT 300 by referring to the NFT 300 stored in the blockchain 31 (step S106).

Next, the registration information management unit 14 of the access control server 10 compares the wallet address 213 which is acquired from the electronic signature added to the disclosure destination setting request with the wallet address 213 which is included in the NFT 300 and indicates the information of the holder. Then, the registration information management unit 14 of the access control server 10 performs authentication of the user P3 who is a change requester of the disclosure destination (step S107). In this case, the registration information management unit 14 of the access control server 10 confirms that the user P3 who is a change requester is the current holder of the NFT 300.

Next, the registration information management unit 14 of the access control server 10 registers a4, which is the wallet address 214 of the user P4, in the disclosure destination of the disclosure destination management table 102 (step S108). Thereby, the registration information management unit 14 changes the disclosure destination to the user P4.

For example, in a case where the disclosure destination setting request of the user P2 who is an old holder and is not a current holder is received from the terminal device 22, the registration information management unit 14 of the access control server 10 determines that the requester and the holder of the NFT 300 do not match. In this case, the registration information management unit 14 of the access control server 10 rejects the disclosure destination setting request that is a change request of the disclosure destination (step S109).

Next, as illustrated in FIG. 8, in a case where the user P4 who is set as the disclosure destination accesses the data 101, the terminal device 23 acquires a URL of the data 101 by referring to the NFT 300 stored in the blockchain 31 (step S110).

Next, the terminal device 23 accesses the acquired URL by using the electronic signature generated from the wallet key 204 (step S111).

The disclosure destination authentication unit 13 of the access control server 10 confirms that the user P4 who has requested the access is set as the disclosure destination in the disclosure destination management table 102 based on the wallet address 214 obtained by verifying the electronic signature. Then, the disclosure destination authentication unit 13 of the access control server 10 discloses the information of the data 101 to the user P4 by transmitting the information of the data 101 to the terminal device 24 used by the user P4 (step S112).

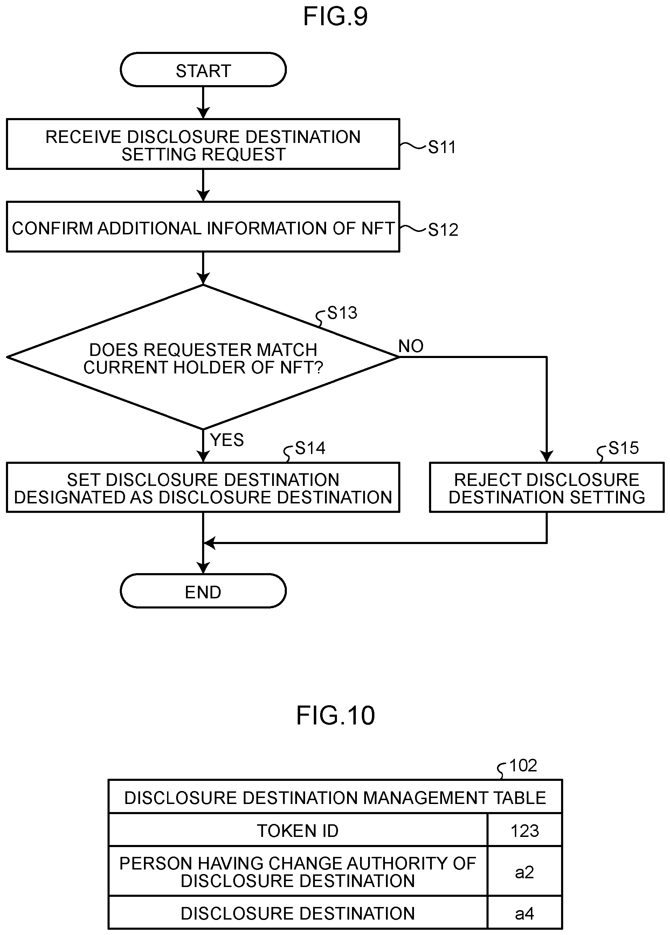

FIG. 9 is a flowchart of disclosure destination setting processing for the data associated with the NFT by the access control server according to the second example. Next, a flow of the disclosure destination setting processing for the data 101 associated with the NFT 300 by the access control server 10 according to the present example will be described again with reference to FIG. 9.

The communication control unit 11 receives a disclosure destination setting request for setting a predetermined user as a disclosure destination (step S11).

When receiving an input of the disclosure destination setting request received by the communication control unit 11, the registration information management unit 14 acquires the information of the current holder of the NFT 300 by confirming the additional information of the NFT 300 stored in the blockchain 31 (step S12).

Next, the registration information management unit 14 verifies the electronic signature included in the disclosure destination setting request that is a change request of the disclosure destination, and acquires the wallet address of the change requester. Then, the registration information management unit 14 determines whether or not the change requester of the disclosure destination, that is, the requester of the disclosure destination setting request matches the current holder of the NFT 300 by comparing the wallet address obtained by verifying the electronic signature with the information of the current holder of the NFT 300 (step S13).

In a case where the requester of the disclosure destination setting request matches the current holder of the NFT 300 (step S13: Yes), the registration information management unit 14 registers the disclosure destination designated in the disclosure destination setting request in the disclosure destination management table 102. Thereby, the registration information management unit 14 sets, for the data 101 associated with the NFT 300, the disclosure destination designated in the disclosure destination setting request (step S14).

On the other hand, in a case where the requester of the disclosure destination setting does not match the current holder of the NFT 300 (step S13: No), the registration information management unit 14 rejects disclosure destination setting designated by the disclosure destination setting request (step S15).

As described above, in a case of receiving the disclosure destination setting request that is a change request of the disclosure destination, the access control server according to the present example confirms the information of the holder registered in the NFT, registers the designated disclosure destination in the disclosure destination management table in a case where the change requester of the disclosure destination and the holder match, and changes the disclosure destination. Thereby, the access control server controls the disclosure destination of the data associated with the NFT.

As described above, the access control server according to the present example controls the disclosure destination based on an instruction from the current holder of the NFT. Thus, it is possible to simplify processing when transferring the NFT and to make fraud more difficult. Thereby, the current holder can set and change the disclosure destination of the data without depending on a transfer state while guaranteeing free transfer of the NFT on the blockchain. That is, the holder himself/herself has an authority not only to access data but also to set disclosure to a third party. Therefore, the access control server according to the present example can improve convenience of the NFT.

### [Third Example]

Next, a third example will be described. The access control server 10 according to the present example is also illustrated by the block diagram of FIG. 4. The access control server 10 according to the present example manages a disclosure destination change authority by using the disclosure destination management table 102 held by the access control server 10. Hereinafter, the access control server 10 according to the present example will be described. In the following description, description of operations of each unit that are similar to the operations in the second example may be omitted.

FIG. 10 is a diagram illustrating another example of the disclosure destination management table. The data management unit 12 according to the present example holds the disclosure destination management table 102 illustrated in FIG. 10.

As illustrated in FIG. 10, for example, in the disclosure destination management table 102 according to the present example, in addition to the token ID that is identification information of the NFT 300 and the information of the disclosure destination of the data 101 associated with the NFT 300, a person having a change authority of the disclosure destination is registered. The person having a change authority of the disclosure destination is information of a person having a change authority of the disclosure destination, and in the present example, the wallet address of the holder of the NFT 300 is registered.

The terminal device 21 issues, for the data 101, the NFT 300 in which the user P2 is set as a holder by using the contract 301. In addition, the terminal device 21 registers the data 101 and the disclosure destination management table 102 of the data 101 associated with the NFT 300 in the access control server 10, and causes the data management unit 12 to hold the data 101 and the disclosure destination management table 102. At this time, the terminal device 21 registers the wallet address in the disclosure destination management table 102 as the information of the user P2 who is a holder of the NFT 300.

In a case where the user P2 transfers the NFT 300 to the user P3, the terminal device 22 adds the electronic signature of the user P3 generated based on the wallet key 203 of the user P3 to an update request for updating the person having a change authority of the disclosure destination to the user P3, and transmits the update request to the access control server 10. Next, the terminal device 22 rewrites the information of the holder that is included in the additional information of the NFT 300 from the user P2 to the user P3. In this case, the terminal device 22 uses the wallet address of each user as the information of the holder.

In a case where the user P3 sets the user P4 as the disclosure destination of the data 101, the terminal device 23 adds the electronic signature of the user P4 created from the wallet key 204 of the user P4 to the disclosure destination setting request for setting the user P4 as the disclosure destination, and transmits the disclosure destination setting request to the access control server 10.

When transferring the NFT 300 from the user P2 to the user P3, the registration information management unit 14 receives, from the terminal device 22, an update request for updating the person having a change authority of the disclosure destination to the user P3. Then, the registration information management unit 14 verifies the electronic signature that is added to the update request of the person having a change authority of the disclosure destination, and acquires the wallet address of the user P2. Next, the registration information management unit 14 acquires the information of the person having a change authority of the disclosure destination in the disclosure destination management table 102 held by the data management unit 12. Then, the registration information management unit 14 determines whether or not the requester of the update request matches the person having a change authority of the disclosure destination by comparing the wallet address of the user P2 that is acquired from the electronic signature with the information of the person having a change authority of the disclosure destination. In a case where the requester of the update request matches the person having a change authority of the disclosure destination, the registration information management unit 14 determines that the user P2 who is the requester of the update request has an update authority. Next, the registration information management unit 14 updates the information of the person having a change authority of the disclosure destination in the disclosure destination management table 102 to the user P3 designated by the update request. That is, the registration information management unit 14 registers the wallet address of the user P3 as the information of the person having a change authority of the disclosure destination in the disclosure destination management table 102.

In a case where the user P3 sets the user P4 as the disclosure destination of the data 101, the registration information management unit 14 receives a disclosure destination setting request for setting the user P4 as the disclosure destination from the terminal device 23. Then, the registration information management unit 14 verifies the electronic signature added to the disclosure destination setting request, and acquires the wallet address of the user P3. Next, the registration information management unit 14 compares the acquired wallet address with the information of the person having a change authority of the disclosure destination, the holder information being registered in the disclosure destination management table 102 held by the data management unit 12. In a case where the acquired wallet address matches the information of the person having a change authority of the disclosure destination, the registration information management unit 14 determines that the requester of the update request is the person having a change authority of the disclosure destination and has a change authority. Then, the registration information management unit 14 registers the information of the user P4 that is designated by the disclosure destination setting request, in the information of the disclosure destination in the disclosure destination management table 102. That is, the registration information management unit 14 registers the wallet address of the user P4 as the information of the disclosure destination in the disclosure destination management table 102.

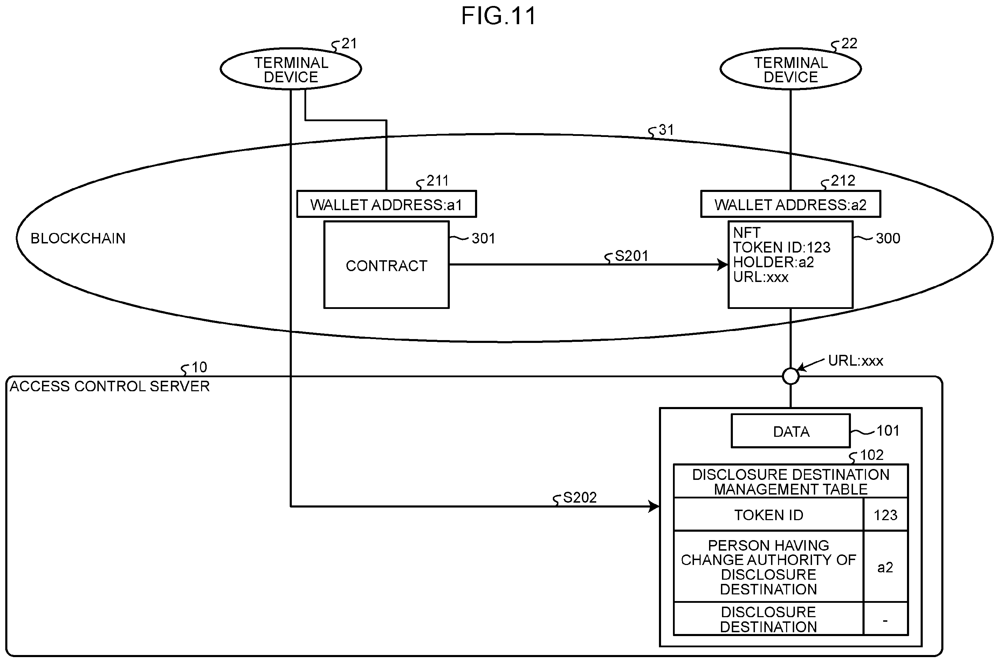

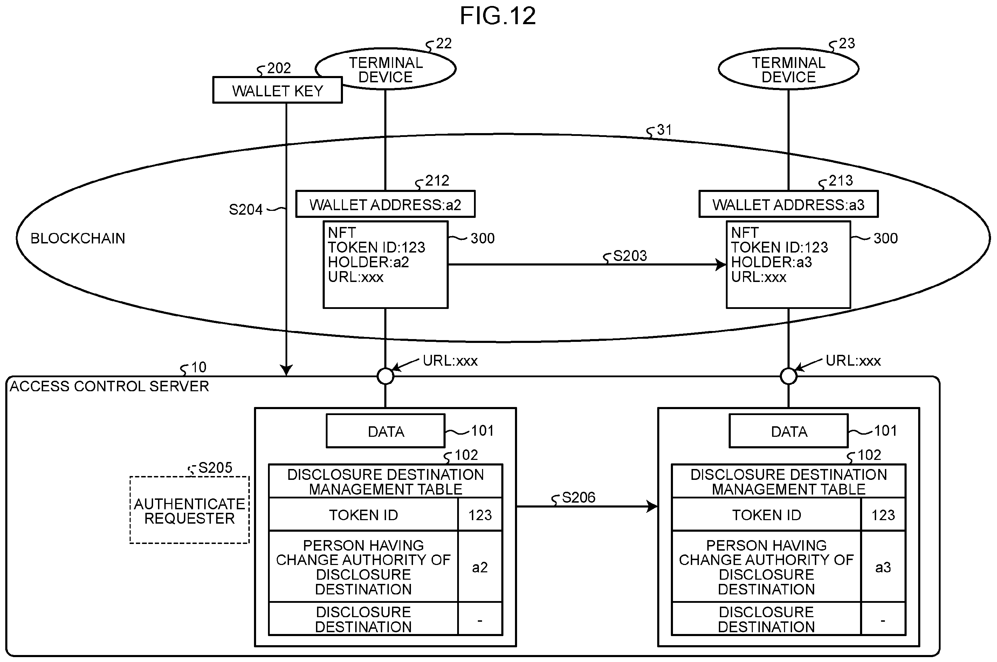

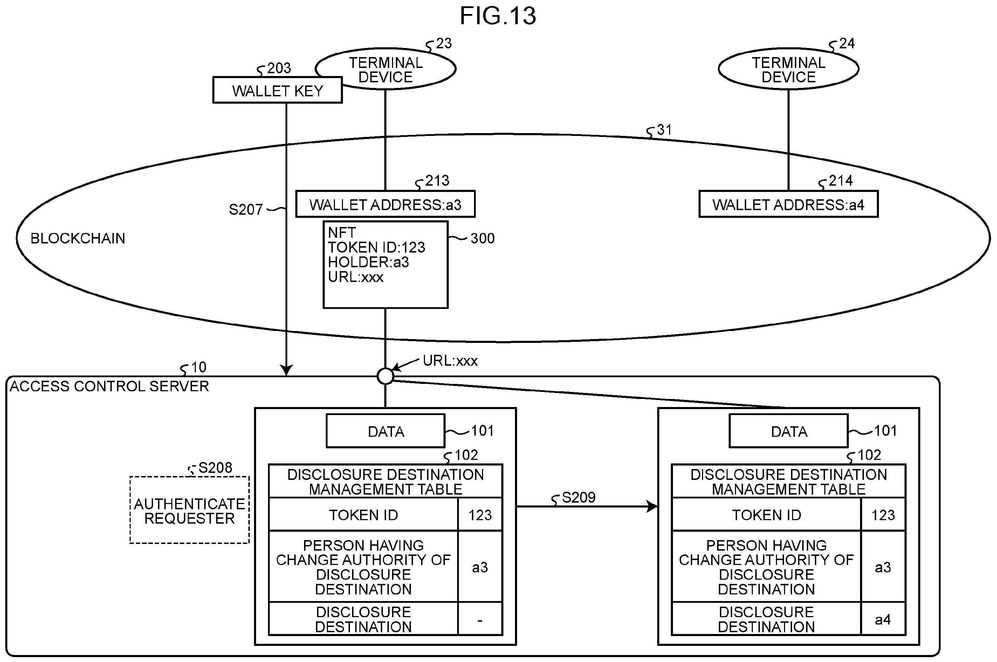

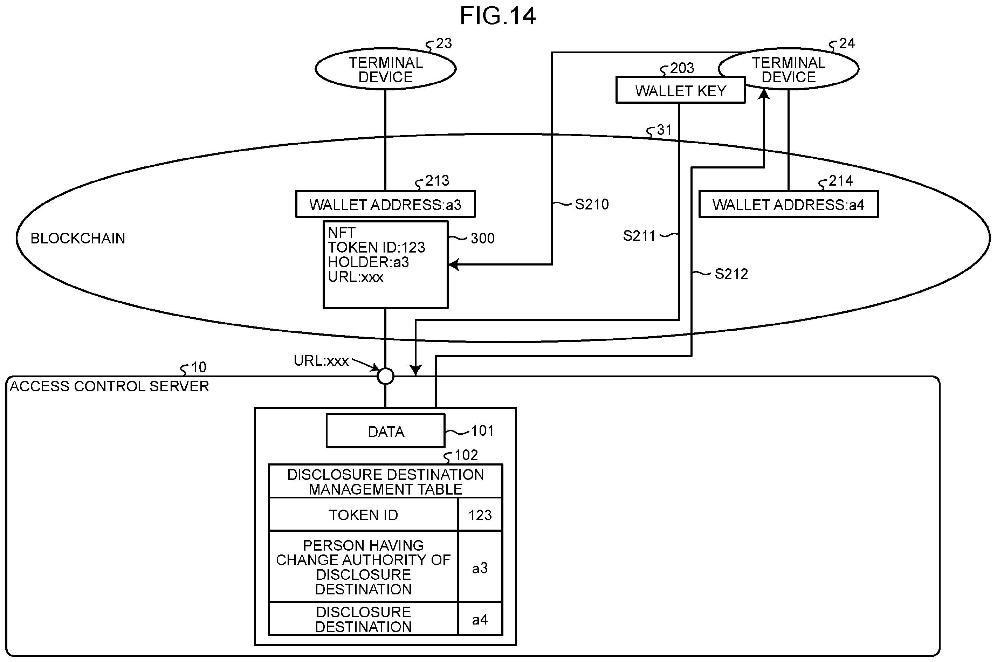

Next, a flow of management of the NFT 300 in the NFT management system 1 according to the third example will be collectively described again. FIG. 11 is a diagram illustrating processing when issuing the NFT in the NFT management system according to the third example. FIG. 12 is a diagram illustrating processing when transferring the NFT in the NFT management system according to the third example. FIG. 13 is a diagram illustrating processing when changing the disclosure destination in the NFT management system according to the third example. FIG. 14 is a diagram illustrating processing when performing access by the user as the disclosure destination in the NFT management system according to the third example.

As illustrated in FIG. 11, the terminal device 21 used by the user P1 who is the issuer of the NFT 300 issues the NFT 300 for the data 101 by using the contract 301 (step S201). The additional information including the token ID, the information of the holder, and the URL of the associated data 101 is added to the NFT 300. In this case, the terminal device 21 registers a2, which is the wallet address 212 of the user P2, as the information of the holder of the NFT 300.

Further, the terminal device 21 causes the data management unit 12 of the access control server 10 to hold the data 101 associated with the NFT 300 and the disclosure destination management table 102 of the data 101 associated with the NFT 300. In this case, the terminal device 21 registers the token ID of the NFT 300 in the disclosure destination management table 102. In addition, the terminal device 21 registers a2, which is the wallet address 212 of the user P2 who is the holder of the NFT 300, as the information of the person having a change authority of the disclosure destination in the disclosure destination management table 102 (step S202).

Next, as illustrated in FIG. 12, the user P2 transfers the NFT 300 to the user P3. In this case, the terminal device 21 changes the information of the holder of the NFT 300 from the wallet address 212 of the user P2 to the wallet address 213 of the user P3. That is, the terminal device 22 changes the information of the holder of the NFT 300 from a2 to a3 (step S203).

Further, the terminal device 22 transmits an update request of the person having a change authority of the disclosure destination to the registration information management unit 14 of the access control server 10, the update request being a request to which the electronic signature of the user P2 generated using the wallet key 202 is added (step S204).

The registration information management unit 14 of the access control server 10 verifies the electronic signature that is added to the update request of the person having a change authority of the disclosure destination, and acquires the wallet address 212. Next, the registration information management unit 14 of the access control server 10 acquires the information of the person having a change authority of the disclosure destination in the disclosure destination management table 102. Then, the registration information management unit 14 of the access control server 10 confirms that the user P2 who is a requester of the update request matches the person having a change authority of the disclosure destination by collating the acquired wallet address 212 with the information of the person having a change authority of the disclosure destination. Thereby, the registration information management unit 14 of the access control server 10 authenticates the user P2 who is a requester of the update request as a person having an update authority (step S205).

Next, the registration information management unit 14 of the access control server 10 updates the information of the person having a change authority of the disclosure destination in the disclosure destination management table 102 to the wallet address 213 of the user P3 that is designated by the update request of the person having a change authority of the disclosure destination. That is, the registration information management unit 14 of the access control server 10 updates the information of the person having a change authority of the disclosure destination in the disclosure destination management table 102 from a2 to a3 (step S206).

Next, as illustrated in FIG. 13, in a case where the user P3 sets the user P4 as the disclosure destination, the terminal device 23 creates a disclosure destination setting request for setting the user P4 as the disclosure destination, the disclosure destination setting request being a request to which the electronic signature of the user P3 created based on the wallet key 203 is added. Then, the terminal device 23 transmits the disclosure destination setting request to the access control server 10 (step S207).

The registration information management unit 14 of the access control server 10 verifies the electronic signature included in the disclosure destination setting request, and acquires the wallet address 213. Next, the registration information management unit 14 of the access control server 10 acquires the information of the person having a change authority of the disclosure destination in the disclosure destination management table 102. Then, the registration information management unit 14 of the access control server 10 confirms that the user P3 who is a requester of the disclosure destination setting request matches the person having a change authority of the disclosure destination by collating the acquired wallet address 213 with the information of the person having a change authority of the disclosure destination. The registration information management unit 14 of the access control server 10 authenticates the user P3 who is a requester of the disclosure destination setting request as a person having a setting authority (step S208).

Next, the registration information management unit 14 of the access control server 10 registers a4, which is the wallet address 214 of the user P4, in the disclosure destination of the disclosure destination management table 102 (step S209). Thereby, the registration information management unit 14 changes the disclosure destination.

Next, as illustrated in FIG. 14, in a case where the user P4 who is set as the disclosure destination accesses the data 101, the terminal device 23 acquires a URL of the data 101 by referring to the NFT 300 stored in the blockchain 31 (step S210).

Next, the terminal device 23 accesses the acquired URL by using the electronic signature of the user P4 that is generated from the wallet key 204 (step S211).

The disclosure destination authentication unit 13 of the access control server 10 confirms that the user P4 who has requested the access is set as the disclosure destination in the disclosure destination management table 102 based on the wallet address 214 obtained by verifying the electronic signature. Then, the disclosure destination authentication unit 13 of the access control server 10 discloses the information of the data 101 to the user P4 by transmitting the information of the data 101 to the terminal device 24 used by the user P4 (step S212).

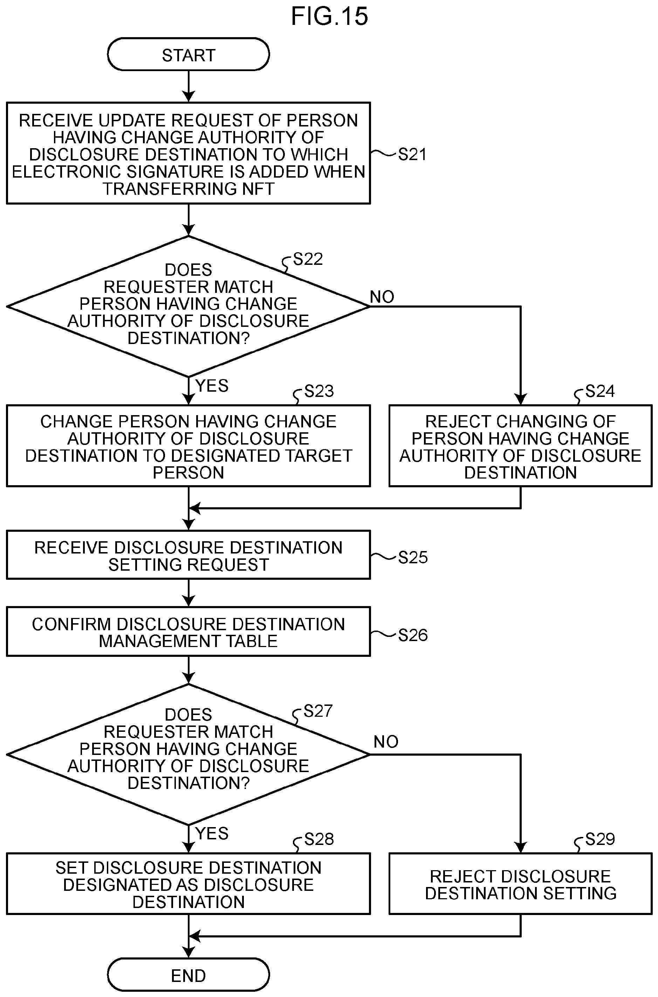

FIG. 15 is a flowchart of processing related to disclosure destination setting for the data associated with the NFT by the access control server according to the third example. Next, a flow of processing related to disclosure destination setting for the data 101 associated with the NFT 300 by the access control server 10 according to the present example will be described again with reference to FIG. 15.

When transferring the NFT 300, the registration information management unit 14 receives an update request of the person having a change authority of the disclosure destination via the communication control unit 11, the update request being a request to which the electronic signature of the old holder is added (step S21).

Next, the registration information management unit 14 verifies the electronic signature, and acquires the wallet address. Then, the registration information management unit 14 determines whether or not the requester of the update request matches the person having a change authority of the disclosure destination by collating the acquired wallet address with the information of the person having a change authority of the disclosure destination that is registered in the disclosure destination management table 102 (step S22).

In a case where the requester matches the person having a change authority of the disclosure destination (step S22: Yes), the registration information management unit 14 changes the information of the person having a change authority of the disclosure destination in the disclosure destination management table 102 to a target person designated by the update request of the person having a change authority of the disclosure destination (step S23). Thereby, the registration information management unit 14 updates the person having a change authority of the disclosure destination.

On the other hand, in a case where the requester does not match the person having a change authority of the disclosure destination (step S22: No), the registration information management unit 14 rejects changing of the person having a change authority of the disclosure destination (step S24).

Thereafter, the communication control unit 11 receives a disclosure destination setting request for setting a predetermined user as a disclosure destination (step S25).

The registration information management unit 14 acquires the information of the person having a change authority of the disclosure destination by confirming the disclosure destination management table 102 (step S26).

Next, the registration information management unit 14 verifies the electronic signature added to the disclosure destination setting request, and acquires the wallet address of the requester of the disclosure destination setting request. Then, the registration information management unit 14 determines whether or not the requester of the disclosure destination setting request matches the person having a change authority of the disclosure destination by comparing the acquired wallet address with the information of the current holder of the NFT 300 (step S27).

In a case where the requester of the disclosure destination setting request matches the person having a change authority of the disclosure destination (step S27: Yes), the registration information management unit 14 registers the disclosure destination designated in the disclosure destination setting request in the disclosure destination management table 102. Thereby, the registration information management unit 14 sets, for the data 101 associated with the NFT 300, the disclosure destination designated in the disclosure destination setting request (step S28). That is, the registration information management unit 14 changes the disclosure destination.

On the other hand, in a case where the requester of the disclosure destination setting request does not match the person having a change authority of the disclosure destination (step S27: No), the registration information management unit 14 rejects disclosure destination setting designated by the disclosure destination setting request (step S29).

As described above, when transferring the NFT, the access control server according to the present example receives an update request of the person having a change authority of the disclosure destination from the old holder, and updates the information of the person having a change authority of the disclosure destination that is registered in the disclosure destination management table. Then, in a case where a disclosure destination setting request is received, when the requester matches the person having a change authority of the disclosure destination that is registered in the disclosure destination management table, the access control server registers the designated disclosure destination in the disclosure destination management table and changes the disclosure destination. Thereby, the access control server controls the disclosure destination of the data associated with the NFT.

As described above, the access control server according to the present example manages the information of the person having a change authority of the disclosure destination and controls the disclosure destination of the data associated with the NFT. In this case, unlike the second example, in a case where the disclosure destination setting request is received, it is possible to determine whether the requester has an authority without acquiring the information of the holder by confirming the NFT on the blockchain. Thus, implementation is easy. Further, the current holder can set and change the disclosure destination of the data without depending on a transfer state while guaranteeing free transfer of the NFT on the blockchain. That is, the holder himself/herself has an authority not only to access data but also to set disclosure to a third party. Therefore, the access control server according to the present example can improve convenience of the NFT.

### [Fourth Example]

Next, a fourth example will be described. The access control server 10 according to the present example is also illustrated by the block diagram of FIG. 4. In a case where an event that triggers update of a change authority of the disclosure destination occurs, the access control server 10 according to the present example voluntarily updates the change authority of the disclosure destination in the disclosure destination management table 102 held by the access control server 10. Hereinafter, the access control server 10 according to the present example will be described. In the following description, description of operations of each unit that are similar to the operations in the third example may be omitted.

The data management unit 12 according to the present example also holds the disclosure destination management table 102 illustrated in FIG. 10, similarly to the third example.

In a case where the user P2 transfers the NFT 300 to the user P3, the terminal device 22 changes the holder information of the NFT 300 from the user P2 to the user P3.

For example, the terminal device 23 transmits, as a trigger for updating the person having a change authority of the disclosure destination, an update request of the person having a change authority of the disclosure destination to the access control server 10 after the transfer of the NFT 300. In this case, since the update request of the person having a change authority of the disclosure destination is merely a trigger, the terminal device 23 does not need to add the electronic signature of the requester to the update request of the person having a change authority of the disclosure destination.

After the transfer of the NFT 300 from the user P2 to the user P3, the registration information management unit 14 receives, from the terminal device 23, as a trigger for updating the person having a change authority of the disclosure destination, the update request of the person having a change authority of the disclosure destination after the transfer of the NFT 300. Here, the event serving as a trigger is not particularly limited as long as the event is information that can be recognized by the registration information management unit 14, and for example, an update request from another person such as the user P2 may be used as a trigger. In addition, the registration information management unit 14 may periodically update the person having a change authority of the disclosure destination by using, as a trigger, a passage of a certain period.

In a case where a trigger for updating the person having a change authority of the disclosure destination occurs, the registration information management unit 14 acquires the token ID of the associated NFT 300 by confirming the disclosure destination management table 102 of the data 101. Next, the registration information management unit 14 acquires the holder information included in the additional information by confirming the NFT 300 on the blockchain 31 corresponding to the acquired token ID. Next, the registration information management unit 14 acquires the information of the person having a change authority of the disclosure destination in the disclosure destination management table 102 corresponding to the data 101.

Then, the registration information management unit 14 determines whether or not the holder of the NFT 300 matches the person having a change authority of the disclosure destination in the disclosure destination management table 102. In a case where the holder of the NFT 300 matches the person having a change authority of the disclosure destination in the disclosure destination management table 102, the registration information management unit 14 does not change the information of the person having a change authority of the disclosure destination in the disclosure destination management table 102.

On the other hand, in a case where the holder of the NFT 300 does not match the person having a change authority of the disclosure destination in the disclosure destination management table 102, the registration information management unit 14 updates the person having a change authority of the disclosure destination that is registered in the disclosure destination management table 102 to the holder of the NFT 300. That is, the registration information management unit 14 registers the wallet address of the user P3 as the information of the person having a change authority of the disclosure destination in the disclosure destination management table 102.

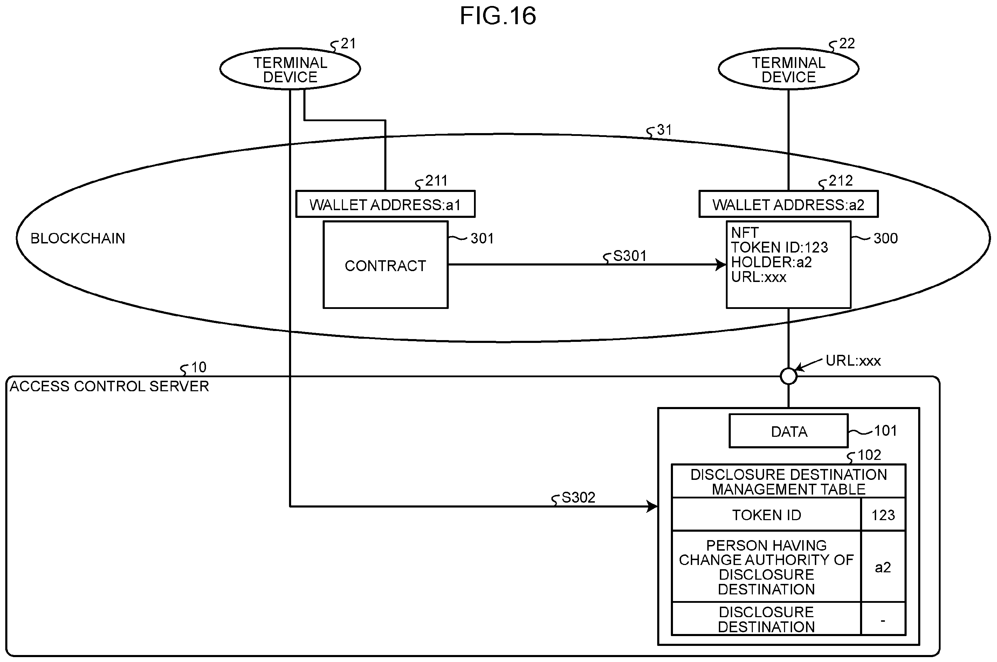

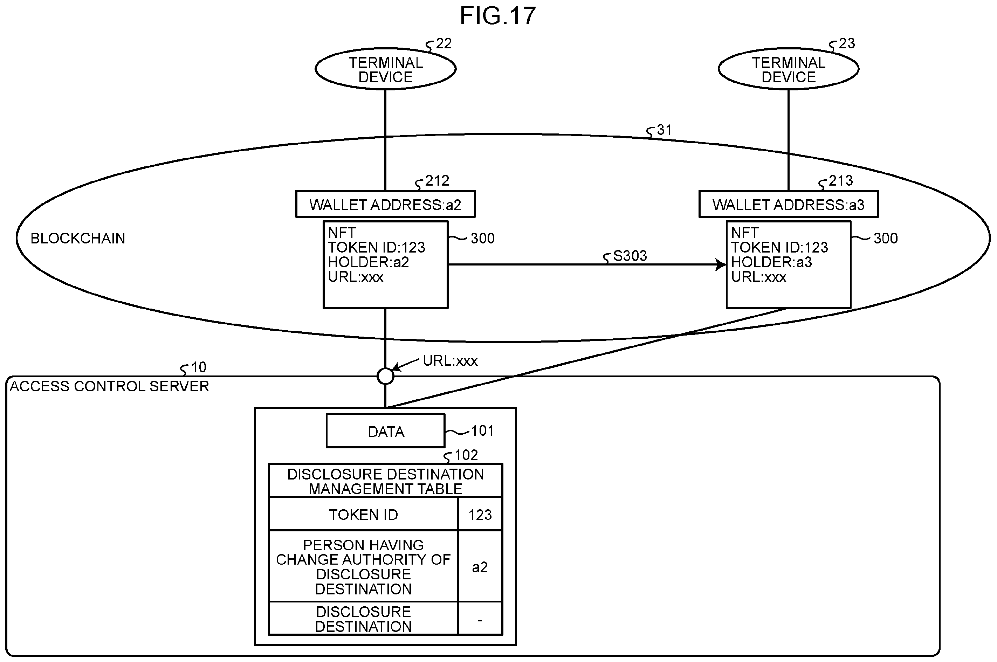

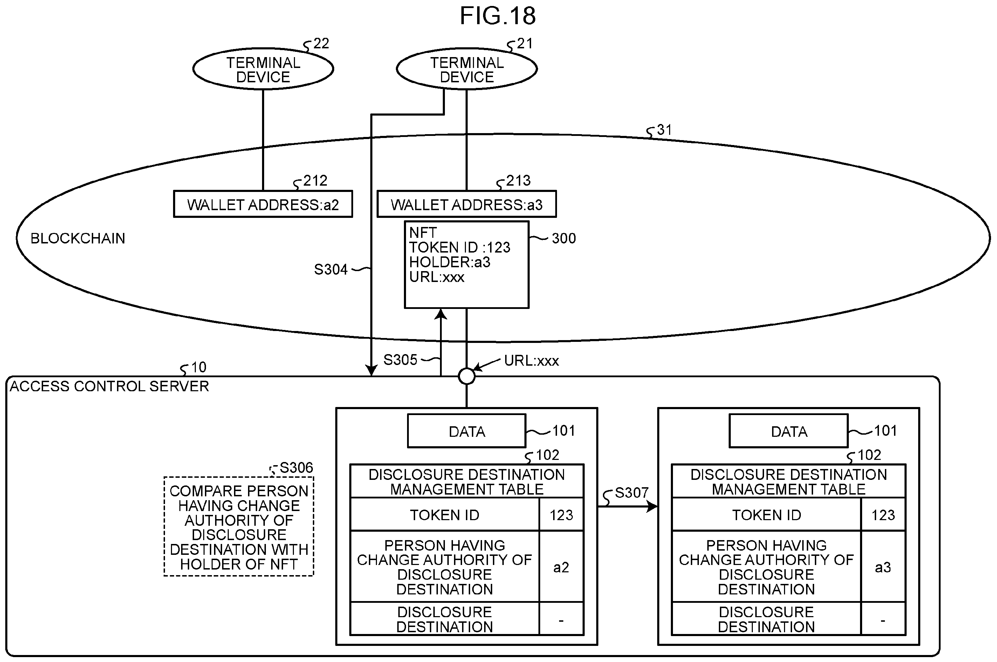

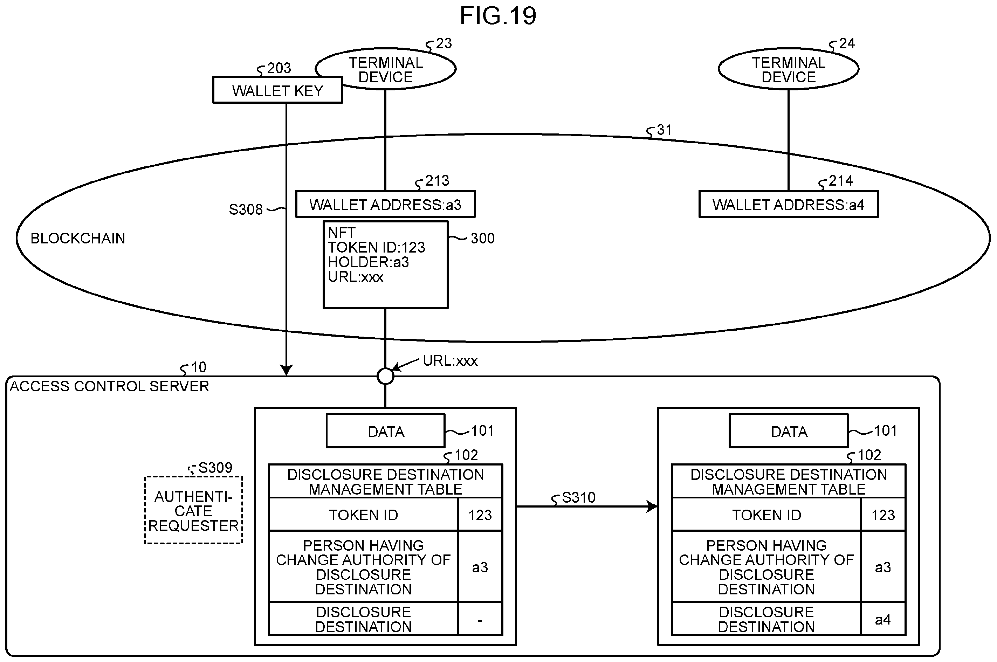

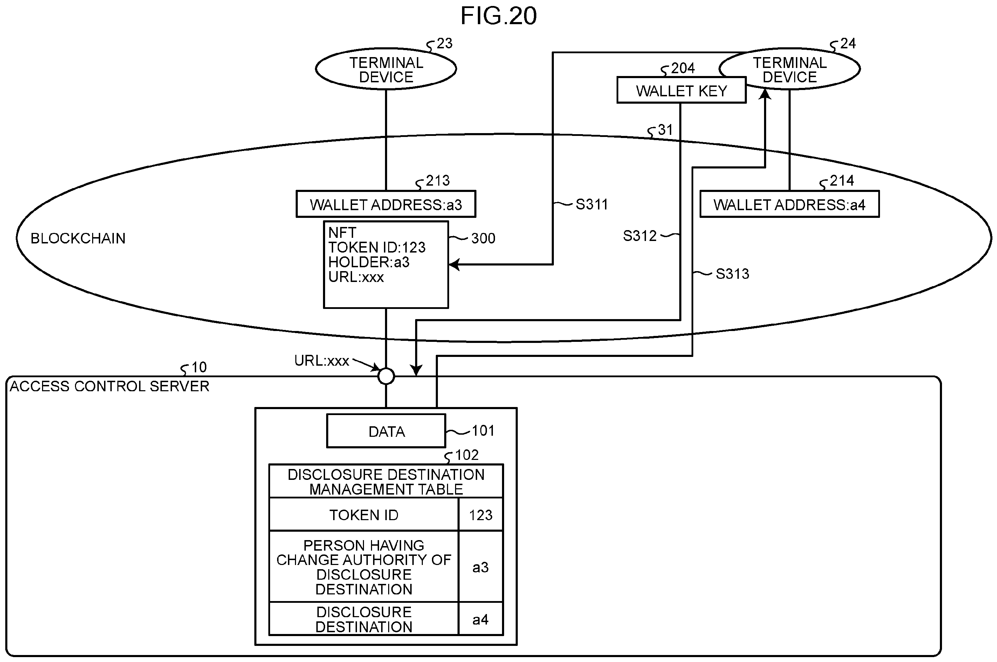

Next, a flow of management of the NFT 300 in the NFT management system 1 according to the fourth example will be collectively described again. FIG. 16 is a diagram illustrating processing when issuing the NFT in the NFT management system according to the fourth example. FIG. 17 is a diagram illustrating processing when transferring the NFT in the NFT management system according to the fourth example. FIG. 18 is a diagram illustrating processing when updating the person having a change authority of the disclosure destination in the NFT management system according to the fourth example. FIG. 19 is a diagram illustrating processing when changing the disclosure destination in the NFT management system according to the fourth example. FIG. 20 is a diagram illustrating processing when performing access by the user as the disclosure destination in the NFT management system according to the fourth example.

As illustrated in FIG. 16, the terminal device 21 used by the user P1 who is the issuer of the NFT 300 issues the NFT 300 for the data 101 by using the contract 301 (step S301). The additional information including the token ID, the information of the holder, and the URL of the associated data 101 is added to the NFT 300. In this case, the terminal device 21 registers a2, which is the wallet address 212 of the user P2, as the information of the holder of the NFT 300.

Further, the terminal device 21 stores the data 101 associated with the NFT 300 and the disclosure destination management table 102 corresponding to the NFT 300 in the access control server 10. In this case, the terminal device 21 registers the token ID of the NFT 300 in the disclosure destination management table 102. In addition, the terminal device 21 registers a2, which is the wallet address 212 of the user P2 who is the holder of the data 101 associated with the NFT 300, as the information of the person having a change authority of the disclosure destination in the disclosure destination management table 102 (step S302).

Next, as illustrated in FIG. 17, the user P2 transfers the NFT 300 to the user P3. In this case, the terminal device 21 changes the information of the holder of the NFT 300 from the wallet address 212 of the user P2 to the wallet address 213 of the user P3. That is, the terminal device 22 changes the information of the holder of the NFT 300 from a2 to a3 (step S303).

Next, as illustrated in FIG. 18, the registration information management unit 14 of the access control server 10 receives the update request of the person having a change authority of the disclosure destination from the terminal device 23, as a trigger for updating the person having a change authority of the disclosure destination (step S304).

Next, the registration information management unit 14 of the access control server 10 acquires the token ID of the NFT 300 from the disclosure destination management table 102 of the data 101. Then, the registration information management unit 14 of the access control server 10 accesses the NFT 300 stored in the blockchain 31 by using the token ID, and acquires a3 as the holder information of the NFT 300 (step S305).

Next, the registration information management unit 14 of the access control server 10 compares the person having a change authority of the disclosure destination in the disclosure destination management table 102 with the holder of the NFT 300 (step S306). Specifically, the registration information management unit 14 of the access control server 10 compares a2, which is registered as the person having a change authority of the disclosure destination in the disclosure destination management table 102, with a3 which is registered as the holder from the NFT 300.

In this case, since the person having a change authority of the disclosure destination in the disclosure destination management table 102 does not match the holder of the NFT 300, the registration information management unit 14 of the access control server 10 updates the information of the person having a change authority of the disclosure destination to the wallet address 213 of the holder of the NFT 300. That is, the registration information management unit 14 of the access control server 10 updates the information of the person having a change authority of the disclosure destination in the disclosure destination management table 102 from a2 to a3 (step S307). Thereby, the registration information management unit 14 updates the person having a change authority of the disclosure destination.

Next, as illustrated in FIG. 19, in a case where the user P3 sets the user P4 as a disclosure destination, the terminal device 23 adds the electronic signature generated based on the wallet key 203 to the disclosure destination setting request for setting the user P4 as the disclosure destination, and transmits the disclosure destination setting request to the access control server 10 (step S308).

The registration information management unit 14 of the access control server 10 verifies the electronic signature included in the disclosure destination setting request, and acquires the wallet address 213. Next, the registration information management unit 14 of the access control server 10 acquires the information of the person having a change authority of the disclosure destination in the disclosure destination management table 102. Then, the registration information management unit 14 of the access control server 10 confirms that the user P3 who is a requester of the disclosure destination setting request matches the person having a change authority of the disclosure destination by collating the acquired wallet address 213 with the information of the person having a change authority of the disclosure destination. Since the user P3 who is the requester of the disclosure destination setting request is the holder, the registration information management unit 14 of the access control server 10 authenticates the user P3 as a person having a valid setting authority (step S309).

Next, the registration information management unit 14 of the access control server 10 registers a4, which is the wallet address 214 of the user P4, in the disclosure destination of the disclosure destination management table 102 (step S310). Thereby, the registration information management unit 14 changes the disclosure destination.

Next, as illustrated in FIG. 20, in a case where the user P4 who is set as the disclosure destination accesses the data 101, the terminal device 23 acquires a URL of the data 101 by referring to the NFT 300 stored in the blockchain 31 (step S311).

Next, the terminal device 23 accesses the acquired URL by using the electronic signature generated based on the wallet key 204 (step S312).

The disclosure destination authentication unit 13 of the access control server 10 confirms that the user P4 who has requested the access is set as the disclosure destination in the disclosure destination management table 102 based on the wallet address 214 obtained by verifying the electronic signature. Then, the disclosure destination authentication unit 13 of the access control server 10 discloses the information of the data 101 to the user P4 by transmitting the information of the data 101 to the terminal device 24 used by the user P4 (step S313).

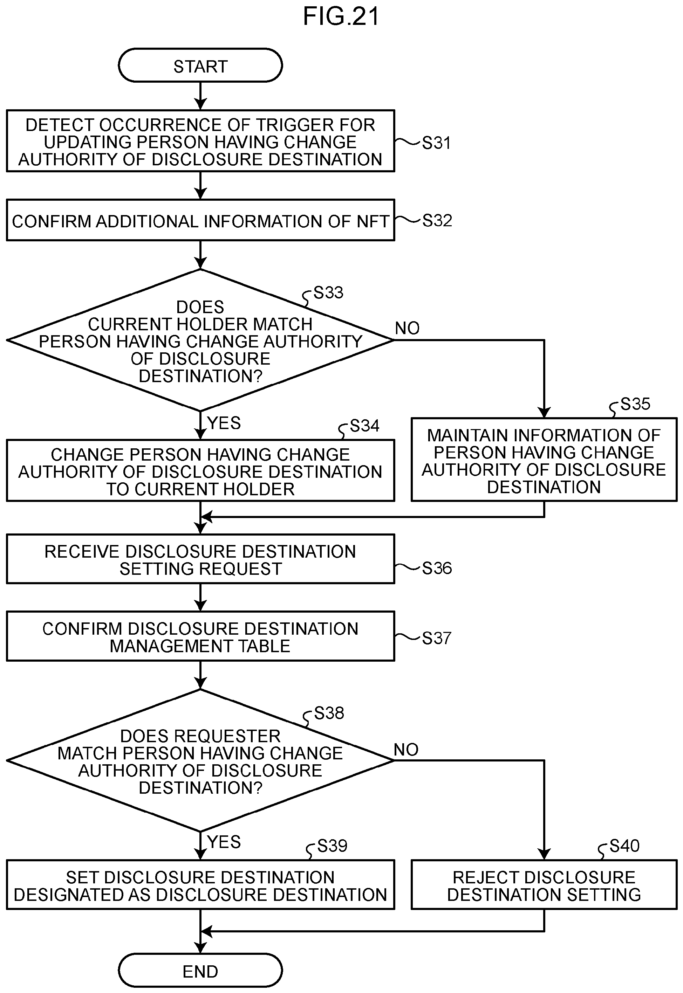

FIG. 21 is a flowchart of processing related to disclosure destination setting for the data associated with the NFT by the access control server according to the fourth example. Next, a flow of processing related to disclosure destination setting for the data 101 associated with the NFT 300 by the access control server 10 according to the present example will be described again with reference to FIG. 21.

The registration information management unit 14 detects an occurrence of a trigger for changing the person having a change authority of the disclosure destination, such as reception of the update request of the person having a change authority of the disclosure destination from the current holder of the NFT 300 (step S31).

Next, the registration information management unit 14 accesses the NFT 300 by using the token ID registered in the disclosure destination management table 102, and confirms the additional information (step S32).

Then, the registration information management unit 14 determines whether or not the current holder of the NFT 300 matches the person having a change authority of the disclosure destination that is registered in the disclosure destination management table 102 (step S33).

In a case where the current holder of the NFT 300 matches the person having a change authority of the disclosure destination (step S33: Yes), the registration information management unit 14 changes the information of the person having a change authority of the disclosure destination in the disclosure destination management table 102 to the current holder of the NFT 300 (step S34). Thereby, the registration information management unit 14 updates the person having a change authority of the disclosure destination.

On the other hand, in a case where the current holder of the NFT 300 does not match the person having a change authority of the disclosure destination (step S33: No), the registration information management unit 14 maintains the information of the person having a change authority of the disclosure destination (step S35).

Thereafter, the communication control unit 11 receives a disclosure destination setting request for setting a predetermined user as a disclosure destination (step S36).

The registration information management unit 14 acquires the information of the person having a change authority of the disclosure destination by confirming the disclosure destination management table 102 (step S37).

Next, the registration information management unit 14 verifies the electronic signature added to the disclosure destination setting request, and acquires the wallet address of the requester of the disclosure destination setting request. Then, the registration information management unit 14 determines whether or not the requester of the disclosure destination setting request matches the person having a change authority of the disclosure destination by comparing the acquired wallet address with the information of the current holder of the NFT 300 (step S38).

In a case where the requester of the disclosure destination setting request matches the person having a change authority of the disclosure destination (step S38: Yes), the registration information management unit 14 registers the disclosure destination designated in the disclosure destination setting request in the disclosure destination management table 102. Thereby, the registration information management unit 14 sets, for the data 101 associated with the NFT 300, the disclosure destination designated in the disclosure destination setting request (step S39). Thereby, the registration information management unit 14 changes the disclosure destination.

On the other hand, in a case where the requester of the disclosure destination setting request does not match the person having a change authority of the disclosure destination (step S38: No), the registration information management unit 14 rejects disclosure destination setting designated by the disclosure destination setting request (step S40).

As described above, in a case where a predetermined event as a trigger occurs, the access control server according to the present example updates the person having a change authority of the disclosure destination to the holder of the NFT in a case where the person having a change authority of the disclosure destination that is registered in the disclosure destination management table does not match the holder of the NFT. Then, in a case where a disclosure destination setting request is received, when the requester matches the person having a change authority of the disclosure destination that is registered in the disclosure destination management table, the access control server registers the designated disclosure destination in the disclosure destination management table. Thereby, the access control server controls the disclosure destination of the data associated with the NFT.

As described above, the access control server according to the present example voluntarily manages the information of the person having a change authority of the disclosure destination and controls the disclosure destination of the data associated with the NFT. In this case, processing when transferring the NFT can be simplified, and a processing load when changing the disclosure destination can be suppressed. Further, the current holder can set and change the disclosure destination of the data without depending on a transfer state while guaranteeing free transfer of the NFT on the blockchain. That is, the holder himself/herself has an authority not only to access data but also to set disclosure to a third party. Therefore, the access control server according to the present example can improve convenience of the NFT.

### (Hardware Configuration)

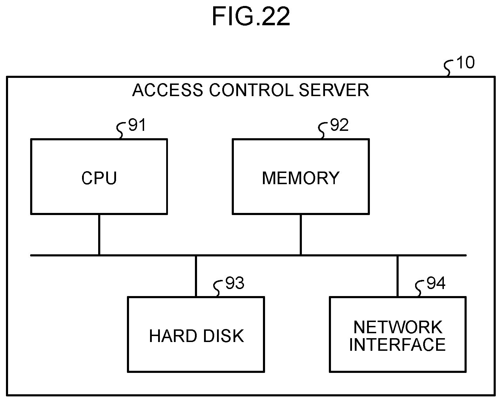

FIG. 22 is a hardware configuration diagram of the access control server. Next, an example of a hardware configuration for implementing each function of the access control server 10 will be described with reference to FIG. 22.

As illustrated in FIG. 22, the access control server 10 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the access control server 10 and an external device. The network interface 94 implements a part of the functions of the communication control unit 11. For example, the network interface 94 relays communication between the access control server 10 and the terminal devices 21 to 24 and between the access control server 10 and the blockchain 31.

The hard disk 93 is an auxiliary storage device. The hard disk 93 stores the data 101 and the disclosure destination management table 102 illustrated in FIG. 2 and FIG. 4. In addition, the hard disk 93 stores programs for implementing the functions of the communication control unit 11, the data management unit 12, and the disclosure destination authentication unit 13 illustrated in FIG. 2 and FIG. 4, and the functions of the registration information management unit 14 illustrated in FIG. 4.

The memory 92 is a main storage device. For example, a dynamic random access memory (DRAM) can be used as the memory 92.

The CPU 91 reads various programs from the hard disk 93, develops the programs in the memory 92, and executes the programs. Thereby, the CPU 91 implements the functions of the communication control unit 11, the data management unit 12, and the disclosure destination authentication unit 13 illustrated in FIG. 2 and FIG. 4, and the functions of the registration information management unit 14 illustrated in FIG. 4.

### Reference Signs List

1 NFT MANAGEMENT SYSTEM
10 ACCESS CONTROL SERVER
11 COMMUNICATION CONTROL UNIT
12 DATA MANAGEMENT UNIT
13 DISCLOSURE DESTINATION AUTHENTICATION UNIT
14 REGISTRATION INFORMATION MANAGEMENT UNIT
21 to 24 TERMINAL DEVICE
30 BLOCKCHAIN NETWORK
31 BLOCKCHAIN
101 DATA
102 DISCLOSURE DESTINATION MANAGEMENT TABLE
201 to 204 WALLET KEY
211 to 214 WALLET ADDRESS
300 NFT

## Claims

1. An access control device comprising:
a data management unit that stores data associated with an NFT on a blockchain and stores disclosure destination information indicating a disclosure destination of the data in association with identification information of the NFT; and
a disclosure destination authentication unit that determines whether or not to disclose the data to a disclosure requester based on the disclosure destination information stored in the data management unit in a case where a disclosure request of the data is received from the disclosure requester, the disclosure request being based on an access destination of the data indicated by the NFT.

2. The access control device according to Claim 1, further comprising:
a registration information management unit that receives a change request of the disclosure destination to which an electronic signature of a change requester is added, and changes the disclosure destination information stored in the data management unit according to the change request in a case where it is determined based on the electronic signature that the change requester has an authority to change the disclosure destination.

3. The access control device according to Claim 2, wherein
the registration information management unit acquires information of a holder of the NFT from the NFT on the blockchain when receiving the change request, and determines whether or not the change requester has an authority to change the disclosure destination based on the information of the holder and the electronic signature.

4. The access control device according to Claim 2, wherein
the data management unit stores information of a person having a change authority of the disclosure destination in association with the identification information of the NFT, and
when transferring the NFT from a transferer to a transferee, the registration information management unit receives an update request in which the person having a change authority is set as the transferee from the transferer, and updates the person having a change authority that is held by the data management unit to the transferee, and when receiving the change request, the registration information management unit determines whether or not the change requester has an authority to change the disclosure destination based on the information of the person having a change authority that is held by the data management unit and the electronic signature.

5. The access control device according to Claim 2, wherein
the data management unit stores information of a person having a change authority of the disclosure destination in association with the identification information of the NFT, and
the registration information management unit updates the information of the person having a change authority that is held by the data management unit to the holder of the NFT in a case where an occurrence of a predetermined event that triggers update of the person having a change authority is confirmed, and determines whether or not the change requester has an authority to change the disclosure destination based on the information of the person having a change authority that is held by the data management unit and the electronic signature when receiving the change request.

6. The access control device according to Claim 5, wherein
the registration information management unit determines that the predetermined event occurs in a case where an update request of the person having a change authority is received from the holder of the NFT.

7. An access control system comprising:
a plurality of terminal devices;
a blockchain; and
an access control device, wherein
the blockchain holds an NFT issued for predetermined data, and
the access control device includes
a data management unit that stores the predetermined data associated with the NFT on the blockchain and stores disclosure destination information indicating a disclosure destination of the predetermined data in association with identification information of the NFT, and
a disclosure destination authentication unit that determines whether or not to disclose the predetermined data to a disclosure requester based on the disclosure destination information stored in the data management unit in a case where a disclosure request of the predetermined data from the disclosure requester is received from any one of the terminal devices, the disclosure request being based on an access destination of the predetermined data indicated by the NFT.

8. An access control program causing a computer to execute a process comprising:
storing data associated with an NFT on a blockchain and storing disclosure destination information indicating a disclosure destination of the data in association with identification information of the NFT; and
determining whether or not to disclose the data to a disclosure requester based on the disclosure destination information in a case where a disclosure request of the data is received from the disclosure requester, the disclosure request being based on an access destination of the data indicated by the NFT.
